# EUROPÄISCHE PATENTSCHRIFT

(11) **EP 1 167 806 B1**
(45) Veröffentlichungstag und Bekanntmachung des Hinweises auf die Patenterteilung: **19.10.2005**
(21) Anmeldenummer: 01114637.0
(22) Anmeldetag: 19.06.2001
(51) Int. Cl.: F16D 65/092, F16D 69/04

(54) **Bremsbelag für Teilbelag-Scheibenbremsen**
Brake lining for a partial lining disc brake
Garniture de frein pour frein à disque de garniture partielle

(30) Priorität: 23.06.2000 DE 10030715
(43) Veröffentlichungstag der Anmeldung: 02.01.2002
(73) Patentinhaber: BECORIT GmbH, D-45659 Recklinghausen (DE)
(72) Erfinder: Otto, Alfred, 45701 Herten (DE); Bauer, Heinz, 45657 Recklinghausen (DE)
(74) Vertreter: Gesthuysen, von Rohr & Eggert

(56) Entgegenhaltungen:
- DE-B- 1 575 774
- DE-U- 29 508 322
- US-A- 5 538 108
- US-A- 6 155 397

## Beschreibung

Die Erfindung betrifft einen Bremsbelag für Teilbelag-Scheibenbremsen, insbesondere für Schienenfahrzeuge, der aus mit Reibelementen bestückten Reibelement-Trägerplatten besteht, wobei zwischen den Reibelementen und der Reibelement-Trägerplatte unter Freilassung eines Spaltes eine gegenüber letzterer dünnere Blattfederplatte zur Ermöglichung einer geringen Schwenkbewegung der Reibelemente relativ zur Reibelement-Trägerplatte angeordnet sind.

Aus der EP 0 619 439 B1 ist ein Bremsbelag der vorstehend genannten Gattung bekannt geworden, bei welcher nach einer ersten Ausführungsform kreiszylindrische Reibelemente auf schmalen, in ihrer Breite etwa ihrem Durchmesser entsprechenden Blattfederplatten befestigt sind und bei denen nach einer weiteren Ausführungsform jeweils drei sechseckförmige Reibelemente auf einer Blattfederplatte mittels dreier Befestigungsbolzen mit eingelegten Distanzringen und Federringen rein kraftschlüssig mit der Trägerplatte verbunden sind. Diese sehr aufwendige Konstruktion ist aufgrund ihrer rein formschlüssigen Verbindung zwischen den einzelnen Blattfederplatten und der Reibelement-Trägerplatte mit einer schlechten Wärmeübertragung verbunden, mit der Folge einer unterschiedlichen Wärmedehnung der Befestigungsbolzen, woraus eine Schieflage der einzelnen Blattfederplatten mit ihren Reibelementen an der Bremsscheibe resultieren kann. Darüber hinaus gestatten die jeweils drei im Dreieck zueinander angeordneten Befestigungsbolzen nur geringe Kippbewegungen der Reibelemente. Und schließlich ist dieser Bremsbelag mit dem Nachteil einer relativ großen unbenutzten Fläche der Reibelement-Trägerplatte zur Fläche der darauf befindlichen Reibelemente behaftet.

Die heute üblichen Bremsbelagausführungen entsprechen der Vorschrift der UIC 541-3 und sind in kompakter Form ausgebildet. Solche Bremsbeläge haben grundsätzlich den Nachteil, daß sie durch ungleiche Verformung sehr unterschiedliche und hohe lokale Flächenpressungen auf der Bremsscheibe bewirken. Damit entstehen auf der Bremsfläche hohe thermische Belastungen, d.h. hohe unterschiedliche Temperaturen, die insbesondere dann zu Brandflecken (hot spots) und letztlich zu Rissen führen, wenn Reibbelagstoffe mit hoher Kunststoffhärte eingesetzt werden.

Bei einem bekannten Bremsbelag anderer Art gemäß der DE 44 36 457 A1 sind an der Unterseite der Reibelemente kugelabschnittförmige Kuppen angeordnet, die in kalottenförmige Vertiefungen der Reibelement-Trägerplatte eingreifen und darin bei geringen Kippbewegungen entgegen der Wirkung von zylindrischen Schraubenfedern oder Tellerfedern gehaltert sind. Dieser äußerst kostspielig herzustellende Bremsbelag ist mit dem Nachteil behaftet, daß außer der Reibelement-Trägerplatte ein zusätzlicher, plattenförmiger Belagträger erforderlich ist und die Federn aufgrund der hohen thermischen Belastung während eines Bremsvorganges ermüden und die Wirksamkeit des Bremssystems beeinträchtigen können. Dabei bewirkt zwar eine Kippbewegung der einzelnen Reibelemente eine Vergleichmäßigung ihrer Flächenpressung an der Reibfläche der Bremsscheibe und damit eine Erhöhung der Bremsleistung, da diese u.a. auch von einer möglichst großen und gleichmäßigen Kontaktnahme der Reibelemente an der Bremsscheibe abhängt, kann jedoch die beschriebenen Nachteile nicht kompensieren.

Ferner ist aus der DE-B-1 575 774 ein gattungsfremder Bremsbelag für Teilbelag-Scheibenbremsen bekannt geworden, welcher zwischen der Reibelement-Trägerplatte und der Blattfederplatte keinen Spalt, sondern eine relativ breite entweder konvex oder konkav ausgebildete Kontaktfläche zwischen der Reibelement-Trägerplatte und der Blattfederplatte aufweist. Bei einem Bremsvorgang erfolgt eine massive Wärmeübertragung von den Reibelementen über die Blattfederplatte auf die Reibelement-Trägerplatte. Infolge dieser ebenso massiven wie ungleichmäßigen Wärmeübertragung von der Blattfederplatte auf die Reibelement-Trägerplatte wird die Blattfederplatte aus der ursprünglich parallelen Bremsebene herausgebogen, so daß beim nächsten Bremsvorgang die Reibelemente ungleichmäßig sowie mit geringerer Kontaktfläche an der Gegenreibfläche anliegen. Die Folge ist eine verminderte Bremsleistung mit ungleichmäßigem Abrieb der Reibelemente sowie eine unterschiedliche Wärmedehnung zwischen den Befestigungsbolzen, die zu einer Zunahme der Schieflage der Reibelemente führt. Hinzu tritt, daß aufgrund der Ausnehmungen in der Blattfederplatte, der ungleichen Form der Reibelemente sowie aufgrund der nicht kongruenten Flächen von Reibelement-Trägerplatte und Blattfederplatte und weiterhin aufgrund der ungleichmäßigen Anordnung der Verbindungsbereiche weitere unterschiedliche Wärmedehnungen und Verzugsbereiche entstehen, die bei dem massiven Wärmemengenstrom infolge eines Bremsvorganges zu einem Verziehen der Bremsbelege auf ihren Befestigungsflächen und einem Herausbiegen aus der gewünschten, ursprünglich planen Brems-Gesamtfläche führen.

Weiterhin ist aus dem DE 85 14 607 U1 ein Bremsbelag bekannt geworden, der aus zehn kreisrunden Reibelementen besteht, die auf mit entsprechenden Durchbrechungen versehenen, relativ dünnwandigen Reibelement-Trägerplatten angeordnet sind, die wiederum über eine Nietbolzenbefestigung an einem Grundkörper befestigt sind. Zwischen der Reibelement-Trägerplatte und dem Grundkörper befindet sich unterhalb eines jeden Reibelementes eine Tellerfeder, die für einen gleichmäßigen Anpreßdruck der Reibelemente an der Bremsscheibe sorgen soll. Aufgrund der hohen Wärmeübertragung der Wärmemengen von den Reibelementen über die Reibelement-Trägerplatte auf die Tellerfedern während eines Bremsvorganges ermüden letztere relativ rasch und können sodann ihre Funktion entweder nicht mehr oder nur höchst unzureichend ausüben, so daß die an sich gewünschte Anpaßbarkeit der Reibflächen der Reibelemente an der Bremsscheibe dem Zufall überlassen bleibt.

Von diesem nächstkommenden Stand der Technik ausgehend, liegt der Erfindung die Aufgabe zugrunde, einen Bremsbelag der eingangs genannten Gattung zu schaffen, der eine relativ große Kippmöglichkeit der Reibelemente um möglichst zahlreiche Kippachsen bei gleichmäßiger Wärmeübertragung von den Reibelementen über die Blattfederplatte auf die Reibelement-Trägerplatte gewährleistet sowie ein großes Verhältnis der Summe der Flächen der Reibelemente zu der Fläche der Reibelement-Trägerplatte sicherstellt.

Diese Aufgabe wird in Verbindung mit dem eingangs genannten Gattungsbegriff erfindungsgemäß dadurch gelöst, daß die Blattfederplatte zur Reibelement-Trägerplatte kongruent ausgebildet ist und über mehrere kleinflächige, zwischen den Reibelementen liegende Verbindungsbereiche mit der Reibelement-Trägerplatte fest verbunden ist. Durch die mit der Reibelement-Trägerplatte kongruent ausgebildete Blattfederplatte wird in Verbindung mit den zur Verbindung erforderlichen, kleinflächigen Verbindungsbereichen nicht nur eine ausgezeichnete Wärmeübertragung beim Bremsvorgang der von den Reibelementen ausgehenden Wärmemengen über die große Blattfederplatte und die zahlreichen Verbindungsbereiche auf die Reibelement-Trägerplatte sichergestellt, sondern bei zahlreichen Freiheitsgraden eine Kippbewegung der einzelnen Reibelemente um zahlreiche Kippachsen ebenso gewährleistet wie ein großes Flächenverhältnis der Summe der Reibelemente zur Gesamtfläche der Reibelement-Trägerplatte.

Nach einer ersten Ausführungsform bestehen die Verbindungsbereiche aus einer Verschweißung. Dabei ist die Blattfederplatte im Bereich einer jeden Verschweißung mit einer kalottenförmigen Auswölbung versehen, deren konvexer Teil der Reibelement-Trägerplatte zugekehrt ist und zu dieser einen Distanzhalter zur Schaffung des Spaltes bildet. Damit wird in fertigungstechnisch einfacher Weise nicht nur eine stoffschlüssige Verbindung zwischen der Blattfederplatte und der Reibelement-Trägerplatte geschaffen, die für eine hohe Wärmeleitung sorgt, sondern auch ein Kugelabschnittsgelenk geschaffen, um welches sich die benachbarten Reibelemente um zahlreiche Kippachsen schwenken lassen. Dabei bildet die Verschweißung zugleich den erforderlichen Abstandshalter zur Schaffung des Spaltes zwischen der Blattfederplatte und der Reibelement-Trägerplatte.

Nach einer zweiten Ausführungsform bestehen die Verbindungsbereiche in an sich bekannter Weise aus einer Vernietung. In vorteilhafter Weiterbildung dieser Vernietung ist die Blattfederplatte rings um jede Nietöffnung in Richtung auf die Reibelement-Trägerplatte mit einem Kragen als Distanzhalter versehen. Dieser Kragen kann beispielsweise bei der Ausstanzung der Nietöffnungen in einem Arbeitsgang geschaffen werden, was gleichfalls die Herstellung und Montage dieses neuen Bremsbelages gegenüber den bisher bekannten Konstruktionen bei verbesserter Wirkung erheblich vereinfacht.

Und schließlich ist es auch möglich, die Verbindungsbereiche alternierend von einer Verschweißung und von einer Vernietung zu bilden.

Nach einer besonders vorteilhaften Weiterbildung der Erfindung sind die Verbindungsbereiche zwischen den Reibelementen so angeordnet, daß von letzteren entgegen den Federkräften der Blattfederplatte Kipp- und Distanzbewegungen um möglichst zahlreiche Achsen relativ zur Reibelement-Trägerplatte ausführbar sind. Die hohe Anzahl an Freiheitsgraden eines jeden Reibelementes gewährleistet eine ausgezeichnete Flächenpressung und eine gleichmäßige Flächenpreßverteilung der Reibelemente relativ zur Bremsscheibe.

Vorteilhaft ist die Reibelement-Trägerplatte axialsymmetrisch ausgebildet und zu beiden Seiten ihrer Symmetrieachse mit der gleichen Anzahl von Reibelementen versehen.

Nach einer besonders vorteilhaften Weiterbildung der Erfindung sind auf jeder Blattfederplatte bis zu 18 Reibelemente mit gleichseitiger, dreieck-, rechteck-, sechseck- oder trapezförmiger Konfiguration mit oder ohne abgerundeten Eckenbereichen aus einem Reibwerkstoff angeordnet. Wesentlich ist bei der Wahl der Form der einzelnen Reibelemente, daß sie über die Gesamtfläche der Reibelement-Trägerplatte mit dieser eine möglichst große Fläche mit geringen Freiräumen einnehmen. Dabei ist es auch möglich, Reibelemente mit dreieckförmiger Konfiguration mit solchen mit rechteckiger oder sechseckiger Konfiguration zu kombinieren.

Diese Reibelemente bestehen in an sich bekannter Weise entweder aus Sinterwerkstoffen oder beinhalten organische Werkstoffe. Zur dauerhaften Befestigung sowie zur Kippbeweglichkeit um möglichst viele Achsen ist ein jedes Reibelement in seinem Mittenbereich auf der Blattfederplatte befestigt, sei es durch Schweißen, Aufsintern oder bei organische Werkstoffe beinhaltende Reibelementen durch Aufkleben oder Aufpressen auf die Blattfederplatte.

Mehrere Ausführungsbeispiele der Erfindung sind in den Zeichnungen dargestellt. Dabei zeigen:
Fig. 1 die Draufsicht auf eine Reibelement-Trägerplatte mit beispeilsweise aufgeschweißter kongruenter Blattfederplatte in der rechten Bildhälfte und die Unterseite der Reibelement-Trägerplatte in der linken Bildhälfte,
Fig. 2 die Draufsicht auf die mit Reibelementen bestückte Blattfederplatte von Fig. 1 in der Draufsicht in der rechten Bildhälfte und mit der Unteransicht der Reibelement-Trägerplatte in der linken Bildhälfte,
Fig. 3 die Teilansicht der rechten Hälfte des Bremsbelages von Fig. 2 in einer dazu um 90° gedrehten Lage sowie in vergrößerter Darstellung,
Fig. 4 die Schnittansicht entlang der Linie IV-IV von Fig. 3,
Fig. 5 die Ausschnittvergrößerung V von Fig. 4 des Verbindungsbereiches in Form einer Schweißnaht und
Fig. 6 eine der Fig. 5 entsprechende Ausschnittvergrößerung des Verbindungsbereiches mit einer Nietverbindung.

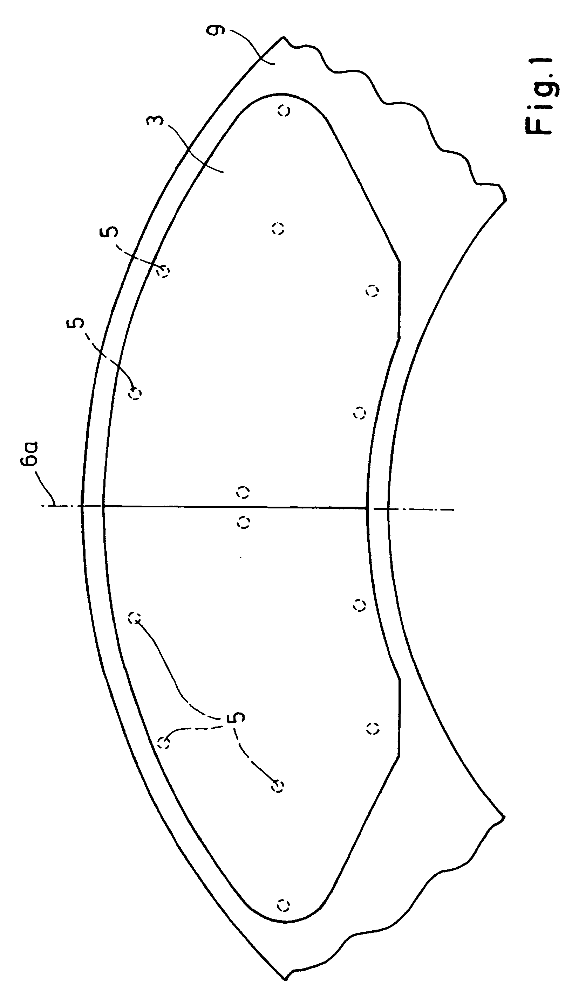

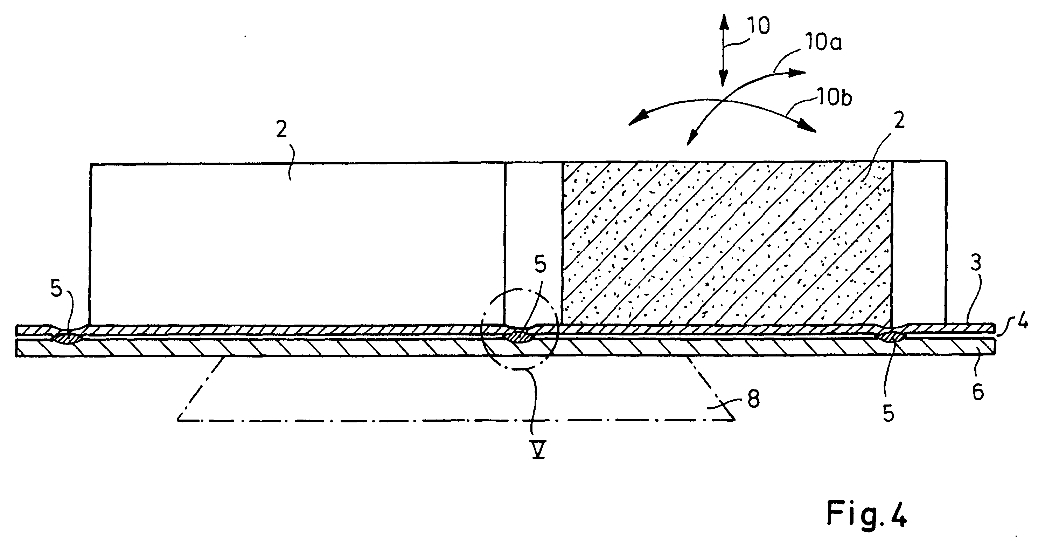

Gemäß den Figuren 1 bis 3 besteht der Bremsbelag 1 im wesentlichen aus einer mit den Reibelementen 2 bestückten Blattfederplatte 3, die unter Freilassung eines Spaltes 4 (s. Figuren 4 bis 6) über zahlreiche kleinflächige Verbindungsbereiche 5 mit einer Reibelement-Trägerplatte 6 fest verbunden ist.

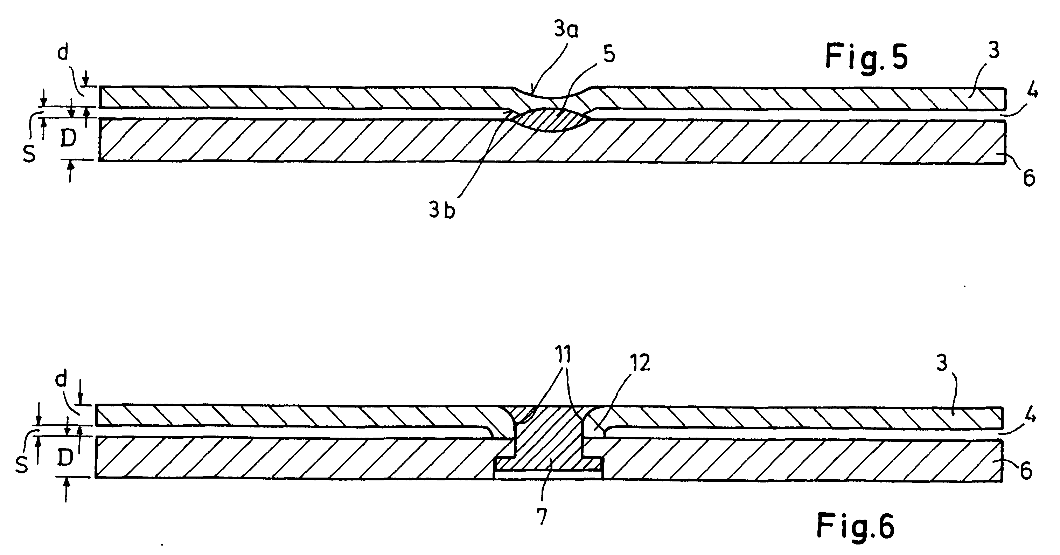

In den Figuren 1 bis 5 bestehen die Verbindungsbereiche 5 aus einer Schweißverbindung und in Fig. 6 aus einer, beispielsweise aus der EP 0 619 439 B1 bekannten Nietverbindung 7. Auf die Art der Befestigung der Reibelement-Trägerplatte 6 kommt es bezüglich der Erfindung im vorliegenden Fall nicht an, so daß diese Befestigung in Fig. 4 nur strichpunktiert angedeutet und pauschal mit der Bezugsziffer 8 bezeichnet ist. Diese Befestigung 8 kann sowohl in an sich bekannter Weise einem doppelkreuzförmigen Blechstück und einem Führungsblech mit schwalbenschwanzförmigem Querschnitt bestehen, die einen Grundkörper bilden.

Die Erfindung gestattet jedoch auch andere Befestigungsmöglichkeiten der Reibelement-Trägerplatte 6 und ist insofern von deren Gestaltung unabhängig.

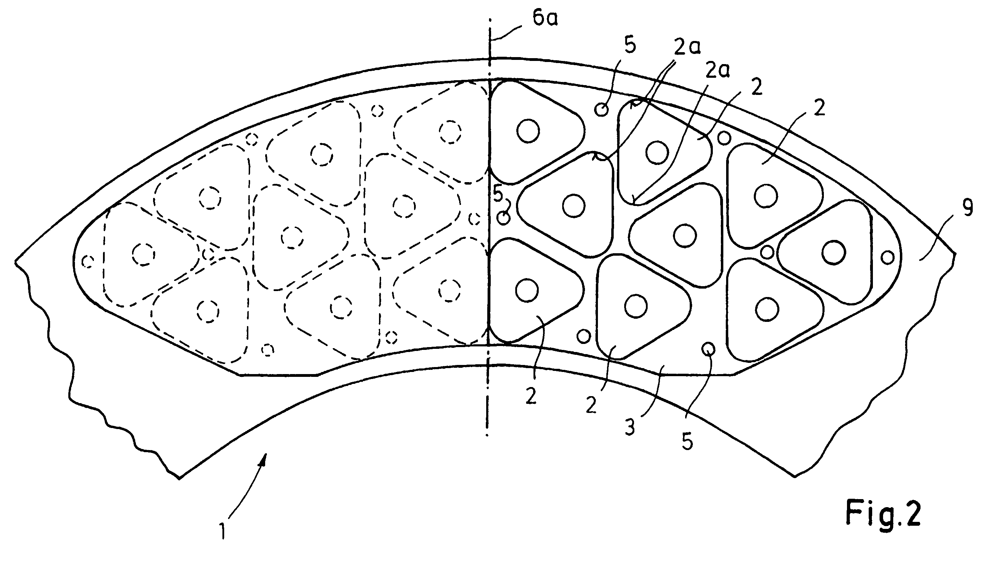

Im Hintergrund der Figuren 1 und 2 ist jeweils eine Bremsscheibe 9 angedeutet, gegen welche die Reibelemente 2 beim Bremsvorgang gepreßt werden müssen.

Wie aus den Figuren 1 bis 3 entnommen werden kann, ist die Blattfederplatte 3 zur Konfiguration der Reibelement-Trägerplatte 6 kongruent ausgebildet.

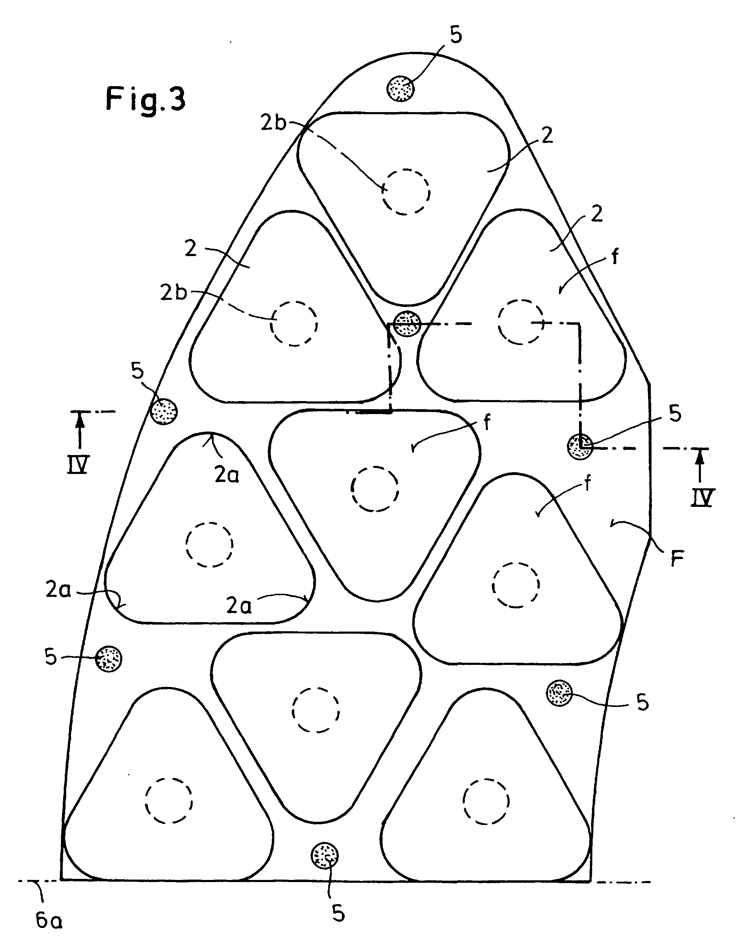

Wie aus den Figuren 2 und 3 hervorgeht, weist jedes Reibelement 2 die Form eines gleichseitigen Dreiecks mit abgerundeten Eckenbereichen 2a auf. Das Verhältnis der Summe f der Reibflächen der Reibelemente 2 zur Gesamtfläche F der Blattfederplatte 3 und damit zur kongruenten Reibelement-Trägerplatte 6 ist gegenüber dem nächstkommenden Stand der Technik gemäß der EP 0 619 439 B1 relativ hoch. Dies entspricht der Bestrebung, zur Vereinfachung der Herstellung und Montage möglichst wenige Reibelemente 2 mit großer Summen-Reibfläche auf der Reibelement-Trägerplatte 6 anzuordnen.

Gemäß den Figuren 2 und 3 sind zu beiden Seiten der Symmetrieachse 6a der Reibelement-Trägerplatte 6 je bis zu neun Reibelemente 2 angeordnet.

Die Reibelemente 2 sind in ihrem Mittenbereich 2b auf die Blattfederplatte 3 aufgesintert oder aufgeklebt. Aufgrund der relativ großen Entfernung der Verbindungsbereiche 5 zu den Mittenbereichen 2b der Reibelemente 2 können diese bei zahlreichen Freiheitsgraden um zahlreiche Achsen Distanz- oder Kippbewegungen in Richtung beispielsweise der in Fig. 4 eingezeichneten Doppelpfeile 10, 10a, 10b durchführen. Dadurch wird nicht nur eine gleichmäßige Flächenpressung der Reibelemente 2 an der Bremsscheibe 9 erzielt, sondern auch eine Vergrößerung des Quotienten der Reibfläche f aus der Summe aller Reibelemente 2 zur Fläche F der Reibelement-Trägerplatte 6 und der zu ihr kongruenten Blattfederplatte 3.

Gemäß den Figuren 4 und 5 ist die Blattfederplatte 3 im Bereich einer jeden Verschweißung 5 mit einer kalottenförmigen Auswölbung 3a versehen, deren konvexer Teil 3b der Reibelement-Trägerplatte 6 zugekehrt ist und zu dieser einen Distanzhalter zur Schaffung des Spaltes 4 bildet. Außerdem wird durch den kugel- bzw. elliptischen Querschnitt der Verschweißung 5 ein Gelenk geschaffen, um welches sich die benachbarten Reibelemente 2 um zahlreiche Kippachsen 10, 10a, 10b schwenken lassen. Zugleich bildet diese Verschweißung 5 den erforderlichen Abstandshalter zur Schaffung des Spaltes 4 mit der Dicke S zwischen der Blattfederplatte 3 und der Reibelement-Trägerplatte 6.

Wie aus Fig. 6 hervorgeht, ist die Nietöffnung 11 in Richtung auf die Reibelement-Trägerplatte 6 mit einem Kragen 12 als Distanzhalter zur Bildung des Spaltes 4 versehen.

Wie außerdem den Figuren 5 und 6 entnehmbar ist, weist die Reibelement-Trägerplatte 6 eine Dicke D von 1,5 mm bis 10 mm, die Blattfederplatte 3 eine Dicke d von 0,5 mm bis 1,5 mm und der Spalt 4 eine Dicke S von 0,1 mm bis 0,5 mm auf.

Dabei besteht die Reibelement-Trägerplatte 6 aus einem schweiß- und/oder nietbaren Stahl wie StO2 und die Blattfederplatte 3 aus einem Kaltfließpreßstahl mit federelastischen Eigenschaften.

### Bezugszeichenliste:

- Bremsbelag: 1
- Reibelement: 2
- Eckenbereich des Reibelementes 2: 2a
- Mittenbereich des Reibelementes 2: 2b
- Blattfederplatte: 3
- kalottenförmige Auswölbung: 3a
- konvexer Teil: 3b
- Spalt: 4
- Verbindungsbereiche: 5
- Reibelement-Trägerplatte: 6
- Symmetrieachse: 6a
- Nietverbindung: 7
- Befestigung: 8
- Bremsscheibe: 9
- Doppelpfeile: 10, 10a, 10b
- Nietöffnung: 1 1
- Kragen: 12
- Summe der Reibflächen der Reibelemente 2: f
- Gesamtfläche der Blattfederplatte 3: F
- Dicke der Reibelement-Trägerplatte 6: D
- Dicke der Blattfederplatte 3: d
- Dicke des Spaltes 4: S

## Patentansprüche

1. Bremsbelag (1) für Teilbelag-Scheibenbremsen, insbesondere für Schienenfahrzeuge, der aus mit Reibelementen (2) bestückten Reibelement-Trägerplatten (6) besteht, wobei zwischen den Reibelementen (2) und der Reibelement-Trägerplatte (6) unter Freilassung eines Spaltes (4) eine gegenüber letzterer (6) dünnere Blattfederplatte (3) zur Ermöglichung einer geringen Schwenkbewegung der Reibelemente (2) relativ zur Reibelement-Trägerplatte (6) angeordnet sind, **dadurch gekennzeichnet, daß** die Blattfederplatte (3) zur Reibelement-Trägerplatte (6) kongruent ausgebildet ist und über mehrere kleinflächige, zwischen den Reibelementen (2) liegende Verbindungsbereiche (5; 7) mit der Reibelement-Trägerplatte (6) fest verbunden ist.

2. Bremsbelag nach Anspruch 1,**dadurch gekennzeichnet, daß** die Verbindungsbereiche aus einer Verschweißung (5) bestehen.

3. Bremsbelag nach den Anspruch 2, **dadurch gekennzeichnet, daß** die Blattfederplatte (3) im Bereich einer jeden Verschweißung (5) mit einer kalottenförmigen Auswölbung (3a) versehen ist, deren konvexer Teil (3b) der Reibelement-Trägerplatte (6) zugekehrt ist und zu dieser einen Distanzhalter zur Schaffung des Spaltes (4) bildet.

4. Bremsbelag nach Anspruch 1,**dadurch gekennzeichnet, daß** die Verbindungsbereiche in an sich bekannter Weise aus einer Vernietung (7) bestehen.

5. Bremsbelag nach Anspruch 4, **dadurch gekennzeichnet, daß** die Blattfederplatte (3) rings um jede Nietöffnung (11) in Richtung auf die Reibelement-Trägerplatte (6) mit einem Kragen (12) als Distanzhalter versehen ist.

6. Bremsbelag nach einem der Ansprüche 1 bis 5, **dadurch gekennzeichnet, daß** als Verbindungsbereiche alternierend eine Verschweißung (5) und eine Vernietung (7) vorgesehen sind.

7. Bremsbelag nach einem der Ansprüche 1 bis 6, **dadurch gekennzeichnet, daß** die Verbindungsbereiche (5; 7) zwischen den Reibelementen (2) so angeordnet sind, daß von letzteren (2) entgegen den Federkräften der Blattfederplatte (3) Distanz- und Kippbewegungen um möglichst zahlreiche Achsen (10, 10a, 10b) relativ zur Reibelement-Trägerplatte (6) ausführbar sind.

8. Bremsbelag nach einem der Ansprüche 1 bis 7, **dadurch gekennzeichnet, daß** die Reibelement-Trägerplatte (6) eine Dicke (D) von 1,5 mm bis 10 mm und die Blattfederplatte (3) eine Dicke (d) von 0,5 mm bis 1,5 mm und der Spalt (4) eine Dicke (S) von 0,1 mm bis 0,5 mm aufweisen.

9. Bremsbelag nach einem der Ansprüche 1 bis 8, **dadurch gekennzeichnet, daß** auf jeder Blattfederplatte (3) bis zu 18 Reibelemente (2) mit gleichseitiger, dreieck-, rechteck-, sechseck- oder trapezförmiger Konfiguration mit eckigen oder abgerundeten Eckenbereichen (2a) aus einem Reibwerkstoff angeordnet sind.

10. Bremsbelag nach einem oder mehreren der Ansprüche 1 bis 9, **dadurch gekennzeichnet, daß** die Reibelement-Trägerplatte (6) axialsymmetrisch ausgebildet und zu beiden Seiten der Symmetrieachse (6a) mit der gleichen Anzahl von Reibelementen (2) versehen ist.

11. Bremsbelag nach einem der Ansprüche 1 bis 10, **dadurch gekennzeichnet, daß** die Reibelement-Trägerplatte (6) aus einem schweiß- oder nietbaren Stahl wie StO2 und die Blattfederplatte (3) aus einem Kaltfließpreßstahl mit federelastischen Eigenschaften besteht.

12. Bremsbelag nach einem der Ansprüche 1 bis 11, **dadurch gekennzeichnet, daß** die Reibelemente (2) je nach ihrer stofflichen Zusammensetzung in ihrem Mittenbereich (2b) auf die Blattfederplatte (3) aufgesintert, aufgeklebt oder aufgepreßt sind.

## Claims

1. Brake lining (1) for partially lined disc brakes, in particular for rail vehicles, which brake lining (1) comprises friction-element carrier plates (6) which is equipped with friction elements (2), a leaf-spring plate (3) which is thinner than the friction-element carrier plate (6) being arranged between the friction elements (2) and the said friction-element carrier plate (6) with a gap (4) being left, in order to make a slight pivoting movement of the friction elements (2) possible relative to the friction-element carrier plate (6),
**characterized in**
**that** the leaf-spring plate (3) is configured congruently with respect to the friction-element carrier plate (6) and is connected fixedly to the friction-element carrier plate (6) via a plurality of connecting regions (5; 7) which have a small area and lie between the friction elements (2).

2. Brake lining according to Claim 1, **characterized in that** the connecting regions comprise a welded connection (5).

3. Brake lining according to Claim 2, **characterized in that** the leaf-spring plate (3) is provided with a dome-shaped protuberance (3a) in the region of every welded connection (5), the convex part (3b) of the said dome-shaped protuberance (3a) facing the friction-element carrier plate (6) and forming a spacer with respect to the latter in order to provide the gap (4).

4. Brake lining according to Claim 1, **characterized in that** the connecting regions comprise a riveted connection (7) in a known manner.

5. Brake lining according to Claim 4, **characterized in that**, around every rivet opening (11), the leaf-spring plate (3) is provided with a collar (12) as a spacer in the direction of the friction-element carrier plate (6).

6. Brake lining according to one of Claims 1 to 5, **characterized in that** a welded connection (5) and a riveted connection (7) are provided alternately as connecting regions.

7. Brake lining according to one of Claims 1 to 6, **characterized in that** the connecting regions (5; 7) are arranged between the friction elements (2) in such a way that spacing and tilting movements can be carried out by the said friction elements (2), counter to the spring forces of the leaf-spring plate (3), about as numerous axes (10, 10a, 10b) as possible relative to the friction-element carrier plate (6).

8. Brake lining according to one of Claims 1 to 7, **characterized in that** the friction-element carrier plate (6) has a thickness (D) of from 1.5 mm to 10 mm, and the leaf-spring plate (3) has a thickness (d) of from 0.5 mm to 1.5 mm, and the gap (4) has a thickness (S) of from 0.1 mm to 0.5 mm.

9. Brake lining according to one of Claims 1 to 8, **characterized in that** up to 18 friction elements (2) having an equilateral, triangular, rectangular, hexagonal or trapezoidal configuration with angular or rounded corner regions (2a) and made from a friction material are arranged on every leaf-spring plate (3).

10. Brake lining according to one or more of Claims 1 to 9, **characterized in that** the friction-element carrier plate (6) is of axially symmetrical configuration and is provided on both sides of the axis of symmetry (6a) with the identical number of friction elements (2).

11. Brake lining according to one of Claims 1 to 10, **characterized in that** the friction-element carrier plate (6) is composed of a weldable or rivetable steel such as StO2 and the leaf-spring plate (3) is composed of a cold extruding steel having spring-elastic properties.

12. Brake lining according to one of Claims 1 to 11, **characterized in that,** depending on their material composition, the friction elements (2) are sintered, adhesively bonded or pressed onto the leaf-spring plate (3) in their centre region (2b).

## Revendications

1. Garniture de frein (1) pour des freins à disque à garniture en plusieurs parties, notamment pour véhicules ferroviaires, cette garniture de frein étant constituée par des plaques porteuses (6) d'éléments de friction équipées d'éléments de friction (2), une plaque formant lame de ressort (3) plus fine que la plaque porteuse (6) d'éléments de friction étant disposée entre les éléments de friction (2) et cette dernière (6) tout en ménageant une fente (4) afin de permettre un léger pivotement des éléments de friction (2) par rapport à la plaque porteuse (6) d'éléments de friction,
**caractérisée en**
**ce que** la plaque formant lame de ressort (3) est conformée pour coïncider avec la plaque porteuse (6) d'éléments de friction et est solidarisée de façon fixe à la plaque porteuse (6) d'éléments de friction par l'intermédiaire d'une pluralité de zones de liaison (5 ; 7) de petite surface situées entre les éléments de friction (2).

2. Garniture de frein selon la revendication 1, **caractérisée en ce que** les zones de liaison sont constituées par une soudure (5).

3. Garniture de frein selon la revendication 2, **caractérisée en ce que**, à la hauteur de chacune des soudures (5), la plaque formant lame de ressort (3) est munie d'une bosse en forme de calotte (3a) dont la partie convexe (3b) est tournée vers la plaque porteuse (6) d'éléments de friction par rapport à laquelle elle forme une pièce d'écartement pour ménager la fente (4).

4. Garniture de frein selon la revendication 1, **caractérisée en ce que** les zones de liaison sont constituées de façon connue en soi par un rivetage (7).

5. Garniture de frein selon la revendication 4, **caractérisée en ce que** la plaque formant lame de ressort (3) est munie autour de chacun des trous (11) pour les rivets, dans la direction de la plaque porteuse (6) d'éléments de friction, d'un rebord (12) faisant office de pièce d'écartement.

6. Garniture de frein selon l'une quelconque des revendications 1 à 5, **caractérisée en ce qu**'à titre de zones de liaison, une soudure (5) et un rivetage (7) sont prévus en alternance.

7. Garniture de frein selon l'une quelconque des revendications 1 à 6, **caractérisée en ce que** les zones de liaison (5 ; 7) sont disposées entre les éléments de friction (2) de telle sorte que ces derniers (2) sont aptes à s'écarter et à basculer, contre l'action de ressort de la plaque formant lame de ressort (3), autour d'un maximum d'axes (10, 10a, 10b) par rapport à la plaque porteuse (6) d'éléments de friction.

8. Garniture de frein selon l'une quelconque des revendications 1 à 7, **caractérisée en ce que** la plaque porteuse (6) d'éléments de friction a une épaisseur (D) comprise entre 1,5 et 10 mm, la plaque formant lame de ressort (3), une épaisseur (d) comprise entre 0,5 et 1,5 mm et la fente (4), une épaisseur (S) comprise entre 0,1 et 0,5 mm.

9. Garniture de frein selon l'une quelconque des revendications 1 à 8, **caractérisée en ce que** sont disposés sur chaque plaque formant lame de ressort (3) jusqu'à 18 éléments de friction (2) conformés en forme de figure dont tous les côtés sont égaux, de triangle, de rectangle, d'hexagone ou de trapèze aux coins (2a) angulaires ou arrondis et réalisés en un matériau de friction.

10. Garniture de frein selon une ou plusieurs des revendications 1 à 9, **caractérisée en ce que** la plaque porteuse (6) d'éléments de friction est conformée pour être axialement symétrique et est munie du même nombre d'éléments de friction (2) de part et d'autre de l'axe de symétrie (6a).

11. Garniture de frein selon l'une quelconque des revendications 1 à 10, **caractérisée en ce que** la plaque porteuse (6) d'éléments de friction est réalisée en un acier se prêtant à un assemblage par soudage ou rivetage tel que l'acier à l'oxygène et que la plaque formant lame de ressort (3) est réalisée en un acier pour extrusion à froid possédant les propriétés élastiques d'un ressort.

12. Garniture de frein selon l'une quelconque des revendications 1 à 11, **caractérisée en ce que**, suivant le matériau dont ils sont composés, les éléments de friction (2) sont frittés, collés ou emmanchés à force par leur zone centrale (2b) sur la plaque formant lame de ressort (3).
